# FASCICULE DE BREVET EUROPEEN

(11) **EP 2 393 714 B1**
(45) Date de publication et mention de la délivrance du brevet: **12.09.2018**
(21) Numéro de dépôt: 10707603.6
(22) Date de dépôt: 28.01.2010
(51) Int. Cl.: B64G 1/40, F17C 13/08, B65D 88/12, F02K 9/76

(54) **RÉSERVOIR CRYOGÉNIQUE ET LANCEUR SUPATIAL COMPORTANT UN TEL RÉSERVOIR**
KRYOTANK UND TRÄGERRAKETE MIT EINEM SOLCHEN TANK
CRYOTANK AND LAUNCH VEHICLE COMPRISING SUCH A TANK

(30) Priorité: 05.02.2009 FR 0950697
(43) Date de publication de la demande: 14.12.2011
(73) Titulaire: L'Air Liquide Société Anonyme pour l'Etude et l'Exploitation des Procédés Georges Claude, 75007 Paris (FR)
(72) Inventeur: LACAPERE, Jérôme, F-38960 St Etienne de Crossey (FR); BUTTERWORTH, James, F-38600 Fontaine (FR)
(74) Mandataire: De Cuenca, Emmanuel Jaime
(86) Numéro de dépôt international: PCT/FR2010/050130
(87) Numéro de publication internationale: WO 2010/089493

(56) Documents cités:
- EP-A- 0 522 954
- DE-A1- 3 146 262
- US-A- 5 279 323
- US-A- 5 901 557

## Description

La présente invention concerne un réservoir cryogénique de lanceur spatial ainsi qu'un lanceur spatial comprenant un tel réservoir.

En phase balistique, ou durant les phases transitoires de mises à postes des satellites, les ergols peuvent mouiller la totalité des parois de leur réservoir. Ceci entraîne une évaporation extrêmement importante du liquide cryogénique dans le réservoir ainsi qu'un fort refroidissement du dôme gazeux situé au dessus de la partie liquide du réservoir. Des solutions à ce problème sont connues pour des ergols non cryogéniques (appelés ergols stockables). Ces solutions sont basées sur les forces capillaires. Les ergols sont retenus en partie inférieure du réservoir (proche de la sortie liquide) par capillarité. Pour les fluides cryogéniques, ces solutions sont difficilement applicables en raison d'instabilités thermo-capillaires et de possibles évaporations près des systèmes capillaires entraînant un assèchement des systèmes et donc une perte d'efficacité.

De préférence selon l'invention, pour résoudre ce problème, une cloison intermédiaire est prévue dans le volume de stockage pour d'une part permettre l'écoulement de liquide par gravité depuis le volume supérieur du réservoir vers le volume inférieur du réservoir via une ou des ouvertures centrales formées dans la cloison intermédiaire et, d'autre part, pour empêcher la remontée du fluide depuis le volume inférieur vers volume supérieur via le ou les ouvertures centrales sous l'action de forces d'accélération.

Ce type de solution est globalement satisfaisant. Cependant, lors du remplissage du réservoir ou dans certaines situations de vol, la vaporisation du liquide cryogénique (notamment contre la face interne du volume de stockage) peut créer de la vapeur qui est emprisonnée sous la cloison mentionnée ci-dessus. Cette vapeur emprisonnée sous la cloison peut altérer les caractéristiques de fonctionnement du réservoir en phase de vol.

Pour résoudre ce problème l'ajout d'orifices sur la cloison permettrait d'évacuer les bulles de vapeur mais cette solution provoquerait des fuites de liquide vers le haut du réservoir lors des phases de roulis. Ces fuites de liquide sont à éviter pour limiter le mouillage des parois du réservoir et des évaporations trop importantes.

Un but de la présente invention est de pallier tout ou partie des inconvénients de l'art antérieur relevés ci-dessus.

A cette fin, le réservoir selon l'invention comprend une enveloppe délimitant un volume de stockage pour du liquide cryogénique et au moins une cloison située dans le volume de stockage, ladite cloison délimitant des volumes supérieur et inférieur pour le fluide dans le réservoir, lesdits volumes supérieur et inférieur communiquant via au moins une ouverture centrale libre formée dans la cloison, la cloison s'étendant depuis la paroi du réservoir vers le centre du volume de stockage en s'inclinant en direction de l'extrémité inférieure du réservoir jusqu'à la ou les ouvertures centrales, pour d'une part permettre l'écoulement de liquide par gravité depuis le volume supérieur vers le volume inférieur via la ou les ouvertures centrales et, d'autre part, pour empêcher ou limiter la remontée du fluide depuis le volume inférieur vers volume supérieur via la ou les ouvertures centrales sous l'action de forces d'accélération, le réservoir comprenant en outre au moins un évent formant au moins un passage dans la cloison distinct de la ou des ouvertures centrales et assurant une communication fluide entre les volumes supérieur et inférieur, le passage de l'évent étant conformé d'une part pour favoriser le transit de vapeur du volume inférieur vers le volume supérieur et d'autre part, pour empêcher ou limiter la remontée de liquide du volume inférieur vers le volume supérieur.

Le document DE 314626A1 décrit un réservoir conforme au préambule de la revendication. Le réservoir décrit dans ce document est du type à tension superficielle (un tamis est prévu sur l'event pour empêcher la pénétration de gaz).

L'évent est ainsi conformé structurellement pour évacuer les bulles de vapeur vers le haut du réservoir (au-dessus de la cloison) tout en permettant de contenir le liquide en dessous de la cloison lors des phases de roulis ou lors des phases dites perturbées (forte ou faible gravité).

Selon l'invention, l'évent comporte au moins une paroi formant une chicane pour le liquide dans le sens de la remontée du volume inférieur vers le volume supérieur. Par ailleurs, des modes de réalisation de l'invention peuvent comporter l'une ou plusieurs des caractéristiques suivantes :
- l'évent définit sur le passage une barrière ou butée mécanique de retenue pour du liquide dans le sens de sa remontée du volume inférieur vers le volume supérieur,
- le ou les évents sont situés sur la cloison, entre l'enveloppe du réservoir et la ou les ouvertures centrales,
- le ou les évents sont situés de façon adjacente à l'enveloppe du réservoir,
- l'évent comporte au moins une paroi formant une butée pour du liquide selon la direction verticale du volume inférieur vers le volume supérieur,
- le passage de l'évent débouche dans le volume supérieur selon une direction perpendiculaire à la direction verticale du réservoir,
- l'évent comprend un boîtier dont le volume intérieur communique fluidiquement d'une part avec le volume inférieur via un ou des premiers orifices formés dans la cloison et, d'autre part avec le volume supérieur via un ou des seconds orifices formés dans le boîtier,
- le boîtier fait saillie dans le volume supérieur,
- le volume intérieur du boîtier communique fluidiquement avec le volume inférieur via au moins deux orifices formés dans la cloison et situés à des distances différentes de l'enveloppe,
- la cloison s'étend sur la majorité de la section intérieure du réservoir selon une direction sensiblement perpendiculaire à un axe vertical A du réservoir passant par les extrémités supérieure et inférieure du réservoir, le rapport entre d'une part la surface de la ou des ouvertures de la cloison et, d'autre part, la section intérieure du réservoir dans un plan sensiblement perpendiculaire à l'axe vertical du réservoir et passant par le plan de l'ouverture étant compris entre 0,0025 et 0,8 et de préférence entre 0,0025 et 0,5 et encore plus préférentiellement entre 0,01 et 0,1,
- au moins une partie de la cloison est légèrement inclinée en direction de l'extrémité inférieure du réservoir,
- la cloison comporte une portion tubulaire orientée vers l'extrémité inférieure du réservoir et définissant l'ouverture,
- la cloison est flexible,
- la ou les ouvertures est (sont) située(s) en partie centrale du réservoir,
- les ouvertures assurent la même pression dans les volumes supérieur et inférieur.

L'invention concerne également un lanceur spatial comportant un réservoir cryogénique conforme à l'une quelconque des caractéristiques ci-dessus ou ci-dessous.

D'autres particularités et avantages apparaîtront à la lecture de la description ci-après, faite en référence aux figures dans lesquelles :
- la figure 1 représente une vue schématique, partielle et en coupe d'un exemple de réalisation de réservoir selon l'invention en phase de remplissage partiel,
- la figure 2 représente le réservoir de la figure 1 après remplissage,
- la figure 3 représente une vue schématique, partielle et en perspective d'une demi coupe verticale du réservoir des figures 1 et 2,
- la figure 4 représente une vue schématique, partielle et en coupe d'un détail d'un évent d'un réservoir selon l'invention,
- la figure 5 représente une vue schématique et en coupe d'un autre exemple de réalisation d'un réservoir selon l'invention.

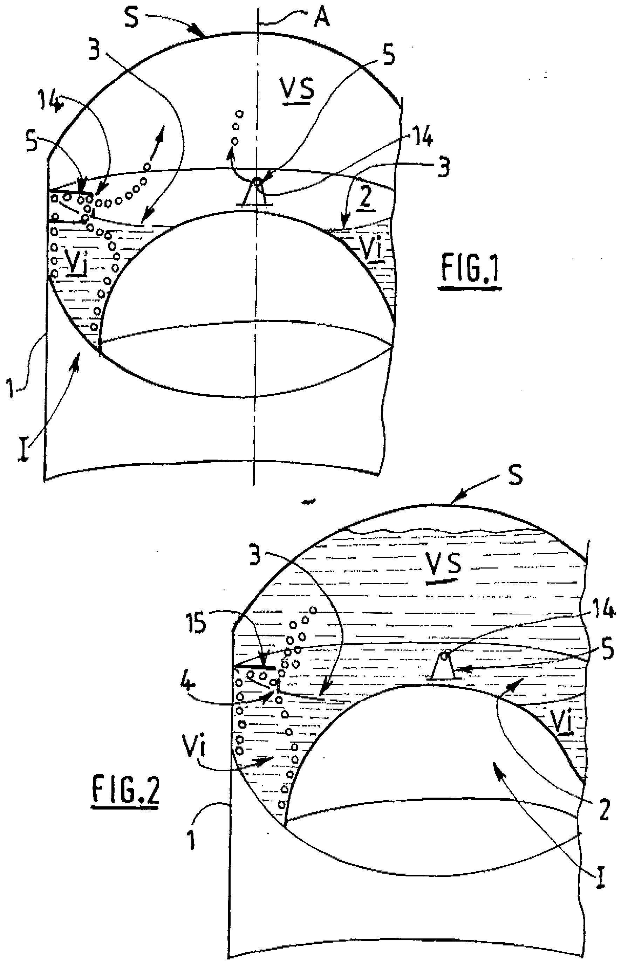

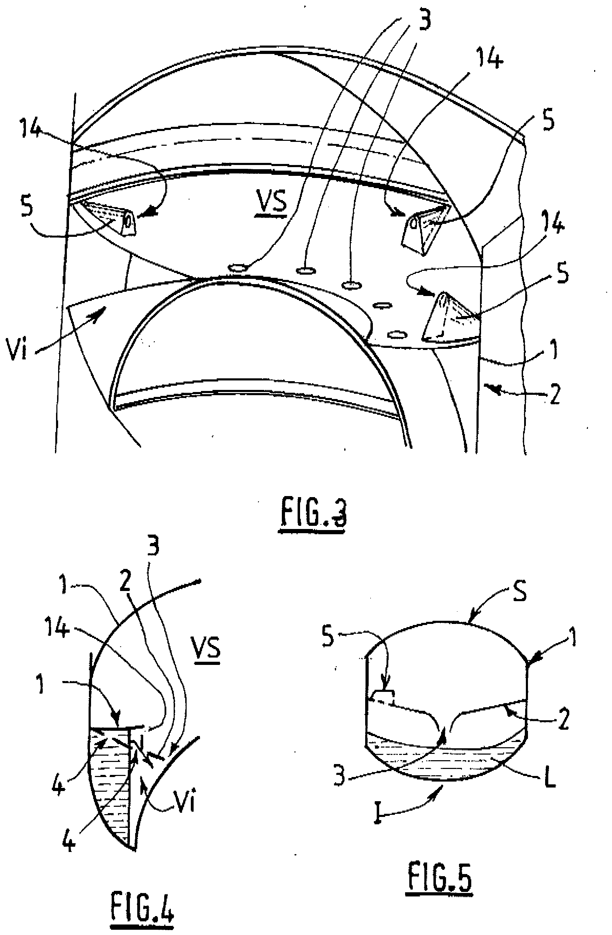

L'invention va être décrite aux figures 1 à 4 dans une application à un réservoir dit « à fond concave » (la convexité étant à l'intérieur du réservoir 1). Bien entendu, l'invention peut s'appliquer à tout autre forme de réservoir et notamment aux réservoirs à fond convexe (figure 5).

Le réservoir représenté aux figures 1 à 4 comprend une paroi ou enveloppe 1 périphérique délimitant un volume de stockage pour le fluide cryogénique (par exemple une portion centrale sensiblement cylindrique et deux extrémités en forme de dôme).

Par soucis de simplification, l'orifice de sortie du fluide situé dans la partie inférieure I du réservoir n'est pas représenté. Classiquement, un tel réservoir est constitué d'une structure en alliage d'aluminium isolé avec des panneaux de mousse cellulaire. Selon une particularité de l'invention, le réservoir contient une cloison 2 située dans le volume de stockage et agencée pour retenir le liquide lors d'accélérations importantes latérales et/ou axiales. La cloison 2 est par exemple fixée sur la face interne de l'enveloppe 1.

La cloison 2 délimite dans le réservoir des volumes supérieur VS et inférieur VI pour le fluide et communiquant via des ouvertures 3 formées dans la cloison 2.

Dans l'exemple de réservoir des figures 1 à 4, la partie centrale du fond peut se trouver au-dessus d'une partie de la cloison 2. C'est-à-dire que la cloison 2 entoure le fond bombé du réservoir. Dans cette configuration, le volume inférieur VI a une forme générale torique. La cloison 2 est courbée vers le bas en direction de la partie centrale du volume de stockage. La ou les ouvertures 3 sont situées à proximité du point le plus bas de la cloison 2, autour du fond bombé qui fait saillie dans le volume de stockage.

La structure de la cloison 2 permet de retenir tout ou partie du liquide en partie basse en cas de faible poussée et faible roulis mais autorise l'écoulement du liquide du volume supérieur VS vers le volume inférieur VI via les ouvertures 3.

Ainsi, lorsque le niveau de liquide L se trouve en dessous de la cloison 2 (figure 1), la cloison 2 permet d'éviter la remontée du liquide vers le volume supérieur VS. La cloison 2 permet même de stocker le liquide en cas d'accélération adverse lorsque celle-ci est appliquée à la suite d'une phase avec du roulis.

Ainsi, grâce à la cloison 2, durant ces phases de sollicitation, le liquide mouille une surface pariétale assez limitée et ne vient pas en contact avec le dôme gazeux supérieur relativement plus chaud. L'évaporation de liquide est ainsi limitée. Le refroidissement du dôme gazeux dans le réservoir est également limité.

Les ouvertures 3 sont libres, c'est-à-dire non pourvus de grilles, filtres ou équivalents, c'est-à-dire que les volumes supérieur VS et inférieur VI forment un seul et même volume de stockage avec des pressions identiques (par opposition aux réservoirs à tension superficielle). Les réservoirs à tension superficielle utilisent des crépines contrairement au réservoir selon l'invention. Bien entendu, les ouvertures peuvent avoir d'autres formes que celles représentées aux figures.

La cloison 2 peut être réalisée en matériau très léger (tissu de verre ou tout autre matériau approprié, par exemple polyaramide, polyester, polyimide...), notamment lorsque le réservoir stocke de l'hydrogène liquide (relativement léger).

Selon une particularité avantageuse, le réservoir comprend en outre au moins un évent 5 et par exemple quatre évents. Chaque évent 5 forme au moins un passage 4, 14 dans la cloison 2 distincts du ou des ouvertures 3 centrales pour assurer une communication fluide entre les volumes supérieur VS et inférieur VI du réservoir. Le passage 4, 14 de l'évent 5 est conformé pour d'une part autoriser le transit de vapeur du volume inférieur VI vers le volume supérieur VS et d'autre part, pour empêcher ou limiter la remontée de liquide du volume inférieur VI vers le volume supérieur VS lors des phases d'accélération.

Par exemple, chaque évent 5 définit sur le passage 4, 14 une barrière 15 ou une butée mécanique de retenue pour du liquide dans le sens de sa remontée du volume inférieur VI vers le volume supérieur. En revanche, la barrière 15 ou butée mécanique guide les vapeurs vers un orifice 14 débouchant dans le volume supérieur VS. De préférence, les évents 5 sont situés sur la cloison 2, entre l'enveloppe 1 du réservoir et le ou les ouvertures 3 centrales. Comme visible aux figures, les évents 5 sont situés plus préférentiellement de façon adjacente à l'enveloppe 1 périphérique du réservoir. Selon l'invention, chaque évent 5 comporte au moins une paroi 15 délimitant une chicane pour le liquide dans le sens de la remontée du volume inférieur VI vers le volume supérieur VS. L'évent 5 peut notamment comporter au moins une paroi 15 formant une butée pour du liquide selon la direction verticale du volume inférieur VI vers le volume supérieur VS. L'évent 5 peut comprendre, par exemple, un boîtier rapporté sur la cloison 2 et dont le volume intérieur communique fluidiquement d'une part avec le volume inférieur VI et d'autre part avec le volume supérieur VS.

Par exemple, le volume intérieur du boîtier communique fluidiquement avec le volume inférieur VI via au moins deux orifices 4 formés dans la cloison 2. De préférence, les deux orifices 4 assurant la communication du boîtier 5 avec le volume inférieur VI sont situés à des distances différentes de l'enveloppe 1 et donc à des hauteurs différentes sur la cloison 2 inclinée.

Le boîtier 5 peut communiquer avec le volume supérieur VS par exemple via un orifice 14 qui débouche selon une direction sensiblement perpendiculaire à la direction verticale du réservoir.

De cette façon, en cours de remplissage, les bulles de liquide vaporisées empruntent les orifices 4, 14 pour rejoindre la partie haute du réservoir (cf. figure 1, le niveau de liquide est représenté par des hachures). Les bulles peuvent également emprunter les ouvertures 3.

En fin de remplissage (figure 2), l'évent 5 est submergé de liquide mais peut continuer à faire transiter les bulles vers l'extrémité supérieure.

En phase de vol, lorsqu'il reste une fraction seulement de liquide dans le volume inférieur VI, l'évent 5 forme un arrêtoir pour le liquide empêchant celui-ci de remonter dans le volume supérieur VS. La figure 4 illustre schématiquement une configuration possible du liquide lors d'un roulis fort associé à une accélération faible. Le liquide peut notamment entrer dans le boîtier de l'évent 5 par l'orifice 4 adjacent à l'enveloppe 1 périphérique et ressortir dans le volume inférieur VI par l'orifice 4 un peu plus éloigné de l'enveloppe 1 périphérique. La vapeur peut quant à elle s'échapper plus facilement vers le volume supérieur VS via l'orifice 14 qui débouche dans ce volume supérieur VI.

Bien entendu, l'invention n'est pas limitée aux exemples ci-dessus. En particulier, la structure et le nombre d'évents peut être modifié en fonction des applications.

De même, des réservoirs à fond convexe peuvent également être pourvus d'un ou plusieurs évents 5. La figure 5 illustre un réservoir dans lequel la cloison 2 est inclinée vers le bas jusqu'à une ouverture 3 centrale (facultativement en forme d'entonnoir).

## Revendications

1. Réservoir cryogénique de lanceur spatial destiné à contenir un ergol, comprenant une enveloppe (1) délimitant un volume de stockage pour du liquide cryogénique et au moins une cloison (2) située dans le volume de stockage, ladite cloison (2) délimitant des volumes supérieur (VS) et inférieur (VI) pour le fluide dans le réservoir, lesdits volumes supérieur (VS) et inférieur (VI) communiquant via au moins une ouverture (3) centrale formée dans la cloison (2), la cloison (2) s'étendant depuis l'enveloppe (1) du réservoir vers le centre du volume de stockage en s'inclinant en direction de l'extrémité inférieure (I) du réservoir jusqu'à la ou les ouvertures (3) centrales, pour d'une part permettre l'écoulement de liquide par gravité depuis le volume supérieur (VS) vers le volume inférieur (VI) via la ou les ouvertures (3) centrales et, d'autre part, pour empêcher ou limiter la remontée du fluide depuis le volume inférieur (VI) vers volume supérieur (VS) via la ou les ouvertures (3) centrales sous l'action de forces d'accélération, le réservoir comprenant en outre au moins un évent (5) formant au moins un passage (4, 14) dans la cloison (2) distinct de la ou des ouvertures (3) centrales et assurant une communication fluide entre les volumes supérieur (VS) et inférieur (VI), la au moins une ouverture centrale étant libre et le passage (4, 14) de l'évent (5) étant conformé d'une part pour favoriser le transit de vapeur du volume inférieur (VI) vers le volume supérieur (VS) et d'autre part, pour empêcher ou limiter la remontée de liquide du volume inférieur (VI) vers le volume supérieur (VS), **caractérisé en ce que** l'évent (5) comporte au moins une paroi (15) formant une chicane pour le liquide dans le sens de la remontée du volume inférieur (VI) vers le volume supérieur (VS).

2. Réservoir selon la revendication 1 **caractérisé en ce que** l'évent (5) définit sur le passage (4, 14) une barrière (15) ou butée mécanique de retenue pour du liquide dans le sens de sa remontée du volume inférieur (VI) vers le volume supérieur (VS).

3. Réservoir selon la revendication 1 ou 2, **caractérisé en ce que** le ou les évents (5) sont situés sur la cloison (2), entre l'enveloppe (1) du réservoir et la ou les ouvertures (3) centrales.

4. Réservoir selon l'une quelconque des revendications 1 à 3, **caractérisé en ce que** le ou les évents (5) sont situés de façon adjacente à l'enveloppe (1) du réservoir.

5. Réservoir selon l'une quelconque des revendications 1 à 4, **caractérisé en ce que** l'évent (5) comporte au moins une paroi (15) formant une butée pour du liquide selon la direction verticale du volume inférieur (VI) vers le volume supérieur (VS).

6. Réservoir selon l'une quelconque des revendications 1 à 5, **caractérisé en ce que** le passage (4, 14) de l'évent (5) débouche dans le volume supérieur (VS) selon une direction perpendiculaire à la direction verticale du réservoir.

7. Réservoir selon l'une quelconque des revendications 1 à 6, revendication, **caractérisé en ce que** l'évent (5) comprend un boîtier dont le volume intérieur communique fluidiquement d'une part avec le volume inférieur (VI) via un ou des premiers orifices (4) formés dans la cloison et, d'autre part avec le volume supérieur (VS) via un ou des seconds orifices (14) formés dans le boîtier.

8. Réservoir selon la revendication 7, **caractérisé en ce que** le boîtier fait saillie dans le volume supérieur (VS).

9. Lanceur spatial, **caractérisé en ce qu'**il comporte un réservoir cryogénique conforme à l'une quelconque des revendications 1 à 8.

## Patentansprüche

1. Kryobehälter einer Trägerrakete, der dazu bestimmt ist, einen Treibstoff zu enthalten, umfassend eine Hülle (1), die ein Speichervolumen für kryogene Flüssigkeit eingrenzt, und mindestens eine Trennwand (2), die in dem Speichervolumen angeordnet ist, wobei die Trennwand (2) ein oberes (VS) und ein unteres (VI) Volumen für die Flüssigkeit in dem Behälter eingrenzt, wobei das obere (VS) und das untere (VI) Volumen über mindestens eine zentrale Öffnung (3), die in der Trennwand (2) ausgebildet ist, miteinander verbunden sind, wobei sich die Trennwand (2) von der Hülle (1) des Behälters zur Mitte des Speichervolumens durch Neigen in Richtung des unteren Endes (I) des Behälters zu der oder den zentralen Öffnungen (3) erstreckt, um einerseits den Flüssigkeitsdurchfluss durch Schwerkraft vom oberen Volumen (VS) zum unteren Volumen (VI) über die zentrale(n) Öffnung(en) (3) zu ermöglichen und andererseits den Wiederanstieg der Flüssigkeit vom unteren Volumen (VI) zum oberen Volumen (VS) über die zentrale(n) Öffnung(en) (3) unter Einwirkung von Beschleunigungskräften zu verhindern oder zu begrenzen, wobei der Behälter weiter mindestens eine Entlüftung (5) umfasst, die mindestens einen Durchgang (4, 14) in der Trennwand (2) getrennt von der/den zentralen Öffnung(en) (3) bildet und eine Fluidverbindung zwischen dem oberen (VS) und dem unteren (VI) Volumen gewährleistet, wobei die mindestens eine zentrale Öffnung frei ist und der Durchgang (4, 14) der Entlüftung (5) ausgeformt ist, um einerseits die Durchleitung von Dampf vom unteren Volumen (VI) zum oberen Volumen (VS) zu begünstigen und andererseits den Wiederanstieg der Flüssigkeit vom unteren Volumen (VI) zum oberen Volumen (VS) zu verhindern oder zu begrenzen, **dadurch gekennzeichnet, dass** die Entlüftung (5) mindestens eine Wand (15) aufweist, die eine Schikane für die Flüssigkeit in Richtung ihres Wiederanstiegs vom unteren Volumen (VI) zum oberen Volumen (VS) bildet.

2. Behälter nach Anspruch 1, **dadurch gekennzeichnet, dass** die Entlüftung (5) auf dem Durchgang (4, 14) eine mechanische Sperre (15) oder Anschlag zum Zurückhalten der Flüssigkeit in Richtung ihres Wiederanstiegs vom unteren Volumen (VI) zum oberen Volumen (VS) definiert.

3. Behälter nach Anspruch 1 oder 2, **dadurch gekennzeichnet, dass** die Entlüftung(en) (5) auf der Trennwand (2) zwischen der Hülle (1) des Behälters und der oder den zentralen Öffnung(en) (3) angeordnet ist (sind).

4. Behälter nach einem der Ansprüche 1 bis 3, **dadurch gekennzeichnet, dass** die Entlüftung(en) (5) angrenzend an die Hülle (1) des Behälters angeordnet ist (sind).

5. Behälter nach einem der Ansprüche 1 bis 4, **dadurch gekennzeichnet, dass** die Entlüftung (5) mindestens eine Wand (15) aufweist, die einen Anschlag für die Flüssigkeit in vertikaler Richtung vom unteren Volumen (VI) zum oberen Volumen (VS) bildet.

6. Behälter nach einem der Ansprüche 1 bis 5, **dadurch gekennzeichnet, dass** der Durchgang (4, 14) der Entlüftung (5) in das obere Volumen (VS) in einer Richtung senkrecht zur vertikalen Richtung des Behälters mündet.

7. Behälter nach einem der Ansprüche 1 bis 6, **dadurch gekennzeichnet, dass** die Entlüftung (5) ein Gehäuse umfasst, dessen Innenvolumen einerseits mit dem unteren Volumen (VI) über eine oder mehrere in der Trennwand ausgebildete erste Öffnungen (4) und andererseits mit dem oberen Volumen (VS) über eine oder mehrere in dem Gehäuse ausgebildete zweite Öffnungen (14) fluidtechnisch verbunden ist.

8. Behälter nach Anspruch 7, **dadurch gekennzeichnet, dass** das Gehäuse in das obere Volumen (VS) hineinragt.

9. Trägerrakete, **dadurch gekennzeichnet, dass** sie einen Kryobehälter nach einem der Ansprüche 1 bis 8 aufweist.

## Claims

1. Cryogenic tank of a launch vehicle adapted to contain rocket propellant, comprising a shell (1) delimiting a storage volume for a cryogenic liquid and at least one wall (2) located within the storage volume, said wall (2) delimiting an upper volume (VS) and a lower volume (VI) for the liquid contained in the tank, said upper volume (VS) and lower volume (VI) communicating through at least one central opening (3) formed in the wall (2), the wall (2) extending from the shell (1) of the tank towards the centre of the storage volume along a slope in the direction of the lower end (I) of the tank down to the central opening(s) (3), on the one hand to allow the liquid to flow, under the effect of gravity, from the upper volume (VS) to the lower volume (VI) through the central opening(s) (3) and, on the other hand, to prevent or limit the return of liquid from the lower volume (VI) to the upper volume (VS) through the central opening(s) (3) under the effect of acceleration forces, the tank further comprising at least one vent (5) forming at least one passage (4, 14) in the wall (2) separate from the central opening(s) (3) and ensuring the communication of liquid between the upper volume (VS) and the lower volume (VI), said at least one central opening being free and the passage (4, 14) of the vent (5) being configured on the one hand to favour the passage of vapour from the lower volume (VI) towards the upper volume (VS) and, on the other hand, to prevent or limit the return of liquid from the lower volume (VI) towards the upper volume (VS), **characterised in that** the vent (5) comprises at least one wall (15) forming a chicane for the liquid in the return direction from the lower volume (VI) towards the upper volume (VS).

2. Tank according to claim 1 **characterised in that** the vent (5) defines on the passage (4, 14) a barrier (15) or a mechanical stop retaining the liquid returning upwards from the lower volume (VI) towards the upper volume (VS).

3. Tank according to the claim 1 or 2 **characterised in that** the vent(s) (5) is/are located on the wall (2), between the shell (1) of the tank and the central opening(s) (3).

4. Tank according to any one of the claims 1 to 3 **characterised in that** the vent(s) (5) are adjacent to the shell (1) of the tank.

5. Tank according to any one of the claims 1 to 4 **characterised in that** the vent (5) comprises at least one wall (15) forming a stop retaining the liquid along the vertical direction from the lower volume (VI) towards the upper volume (VS).

6. Tank according to any one of the claims 1 to 5 **characterised in that** the passage (4, 14) of the vent (5) opens into the upper volume (VS) along a direction perpendicular to the vertical direction of the tank.

7. Tank according to any one of the claims 1 to 6 **characterised in that** the vent (5) comprises a housing of which the inner volume fluidly communicates, on the one hand with the lower volume (VI) through one or several first holes (4) formed in the wall, and on the other hand with the upper volume (VS) through one or several holes (14) formed in the housing.

8. Tank according to claim 7 **characterised in that** the housing protrudes inside the upper volume (VS).

9. Launch vehicle **characterised in that** it comprises a cryogenic tank according to any one of the claims 1 to 8.
